# EUROPÄISCHE PATENTANMELDUNG

(11) **EP 3 817 167 A1**
(43) Veröffentlichungstag der Anmeldung: **05.05.2021**
(21) Anmeldenummer: 19205606.7
(22) Anmeldetag: 28.10.2019
(51) Int. Cl.: H02G 3/22, H02G 3/32, H02G 15/00, H02G 3/06

(54) **VERFAHREN ZUM BEFESTIGEN EINER LEITUNG IN EINER ÖFFNUNG**

(71) Anmelder: Hauff-Technik GmbH & Co. KG, 89568 Hermaringen (DE)
(72) Erfinder: PADINEANTU, Patrick, 89542 Herbrechtingen (DE); BURKHARDT, Andreas, 89522 Heidenheim (DE); SCHMID, Jörg, 89129 Langenau (DE)
(74) Vertreter: König Szynka Tilmann von Renesse Patentanwälte Partnerschaft mbB

(57) **Zusammenfassung**

Die Erfindung betrifft Verfahren zum Befestigen einer Leitung (2) in einer Öffnung (3) in einem Wand- oder Bodenelement (4), wobei eine Mantelwand (2.1) der Leitung (2) aus einem Kunststoffmaterial vorgesehen ist,
bei welchem Verfahren
- ein Befestigungsaufsatz (15) vorgesehen wird, der eine Schneide (15.1) aufweist;
- der Befestigungsaufsatz (15) in einem Befestigungsabschnitt (2a) der Leitung (2) solchermaßen auf die Leitung (2) gesetzt wird, dass die Schneide (15.1) axial formschlüssig auf der Leitung (2) sitzt und damit der Befestigungsaufsatz (15) in seiner Axialposition an der Leitung (2) festgelegt ist;
- der Befestigungsaufsatz (15) in eine zumindest indirekte Anlage an einer ersten Seitenfläche (11) des Wand- oder Bodenelements (4), an welcher der Befestigungsabschnitt (2a) der Leitung (2) in einer ersten Leitungsrichtung aus der Öffnung (3) hervorsteht, gebracht wird, sodass die Leitung (2) gegen einen Zug in einer zweiten, der ersten (16.1) entgegengesetzten Leitungsrichtung (16.2) gesichert ist.

## Beschreibung

Die vorliegende Erfindung betrifft ein Verfahren zum Befestigen einer Leitung in einer Öffnung in einem Wand- oder Bodenelement.

In einem typischen Anwendungsfall kann die Öffnung bspw. eine Bohrung in einer Gebäudewand sein. Die Leitung wird dann durch die Bohrung hindurch verlegt, sodass sie sich von der einen Seite der Gebäudewand zur entgegengesetzten Seite erstreckt, z. B. vom Gebäudeäußeren ins -innere. Zur Befestigung und damit Lagefixierung der Leitung in der Öffnung sind aus dem Stand der Technik sogenannte Pressdichtungen bekannt, deren Elastomerkörper in die Öffnung eingesetzt wird und die Leitung umschließt. Der Elastomerkörper wird in Leitungsrichtung verspannt und damit nach außen gegen die Laibung und nach innen gegen die Leitung gepresst, sodass er diese in Position hält.

Der vorliegenden Erfindung liegt das technische Problem zugrunde, ein vorteilhaftes Verfahren zum Befestigen einer Leitung in einer Öffnung anzugeben.

Dies wird erfindungsgemäß mit dem Verfahren gemäß Anspruch 1 gelöst. Dabei wird zunächst eine Leitung vorgesehen, deren Mantelwand aus einem Kunststoffmaterial gebildet ist. Ferner wird ein Befestigungsaufsatz mit einer Schneide vorgesehen und solchermaßen auf die Leitung gesetzt, dass die Schneide axial formschlüssig auf der Leitung sitzt, die Schneide also bspw. die Mantelwand eindrückt bzw. in diese eindringt (siehe unten im Detail). Der Befestigungsaufsatz ist damit formschlüssig in seiner Axialposition gehalten, kann also nicht entlang der Leitung verrutschen. Er wird zudem in eine zumindest indirekte Anlage an einer Seitenfläche des Wand- oder Bodenelements gebracht (an dieser "ersten Seitenfläche" steht per definitionem der Befestigungsabschnitt der Leitung mit dem aufgesetzten Befestigungsaufsatz in einer "ersten Leitungsrichtung" hervor). Aufgrund dieser Anlage ist die Position des Befestigungsaufsatz in der entgegengesetzten, zweiten Leitungsrichtung festgelegt, was wegen des Formschlusses auch für die Leitung gilt.

Damit steht eine vergleichsweise einfache Befestigungsmöglichkeit zur Verfügung, die speziell im Volumenmarkt von Interesse sein kann, auch in Kostenhinsicht. Aufgrund seiner Einfachheit kann das Befestigungsverfahren relativ vielseitig eingesetzt werden, es kann entweder für sich eine abschließende Befestigung darstellen oder bei einer insgesamt komplexeren Befestigung als temporäre Halterung dienen. Die Leitung kann, wie nachstehend im Einzelnen geschildert, z. B. zusätzlich mit einem anschließend in die Öffnung eingebrachten und dort aushärtenden Verfüllmaterial befestigt werden, wobei der Befestigungsaufsatz einem Verrutschen der Leitung während des Verfüll- bzw. Aushärtvorgangs vorbeugt.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Wird bspw. ein Befestigungsverfahren beschrieben, infolgedessen sich eine bestimmte Leitungsanordnung (in der Öffnung befestigte Leitung) ergibt, ist dies auch als Offenbarung dieser Leitungsanordnung zu lesen, und umgekehrt.

Bei der Leitung kann es sich im Allgemeinen auch um ein Kabel handeln, wobei der Kabelmantel die Mantelwand darstellt. Bevorzugt ist die Leitung jedoch ein Hohlrohr, in welchem besonders bevorzugt ein Datenkabel verlegt wird, bspw. ein Kupfer- oder vorzugsweise ein Glasfaserkabel. Bevorzugt wird zunächst die Leitung, also das Hohlrohr, befestigt und anschließend das Datenkabel verlegt, was bspw. einem Knicken des Datenkabels vorbeugen kann. Generell kann das als Leitung vorgesehene Hohlrohr auch ein Mehrschichtrohr sein, insbesondere ein Mehrschichtverbundrohr. Es kann also bspw. innerhalb der Mantelwand aus Kunststoff auch noch weitere Schichten geben, z. B. auch aus Metall.

Für das eingangs erwähnte Eindrücken und/oder -schneiden der Mantelwand kann es von Vorteil sein, wenn die Kunststoff-Mantelwand auch die Außenwandfläche der Leitung bzw. des Rohres bildet. Das Kunststoffmaterial der Mantelwand kann bevorzugt Polyethylen sein, besonders bevorzugt HD-PE. Auch mit Blick auf einen insgesamt einfachen Aufbau kann ein Einschicht-Rohr bevorzugt sein, bildet also die Mantelwand sowohl die Außenwand- als auch die Innenwandfläche. Bspw. mit Blick auf eine zuverlässige Axialfixierung kann bevorzugt sein, dass die Schneide in die Mantelwand eindringt, diese also eingeschnitten wird. Besonders bevorzugt ist der Befestigungsaufsatz so bemessen, dass die Mantelwand ein-, aber nicht durchgeschnitten wird, die Schneide also eine Außenwandfläche der Mantelwand durchdringt, nicht aber eine Innenwandfläche.

Gemäß einer bevorzugten Ausführungsform bildet ein für sich einstückiger Abschnitt des Befestigungsaufsatzes eine Durchgangsöffnung, in welcher im Zuge der Befestigung die Leitung angeordnet wird. Der für sich einstückige Abschnitt erstreckt sich dabei, bezogen auf eine Mittenachse der Durchgangsöffnung, über mehr als 180°, bspw. mindestens 200°, 220°, 230° bzw. 240°. Dies kann z. B. sicherstellen helfen, dass das Aufsetzstück dann an der Leitung verbleibt. Der für sich einstückige Abschnitt ist dabei jedoch nicht in sich geschlossen, sodass die Leitung radial in die Durchgangsöffnung eingebracht, der Befestigungsaufsatz also seitlich auf die Leitung aufgesetzt werden kann.

"Einstückig" meint nicht zerstörungsfrei auftrennbar, bspw. als Spritzgussteil hergestellt (z. B. auch als Mehrkomponenten-Spritzgußteil oder mit Einlegeteil umspritzt). Bevorzugt ist nicht nur der die Durchgangsöffnung bildende Abschnitt, sondern der Befestigungsaufsatz insgesamt ein einstückiges Teil, besonders bevorzugt ein monolithisches Teil. Letzteres meint frei von Materialgrenzen im Inneren, also unterbrechungsfrei durchgehend aus demselben Material geformt, bspw. als Einkomponenten-Spritzgußteil. Alternativ zu dem "zumindest einstückigen Abschnitt" könnte der Befestigungsaufsatz bspw. auch aus zwei Halbschalen zusammengesetzt werden, welche die Leitung dann gemeinsam umschließen. Selbstverständlich können auch mehrere Befestigungsaufsätze, welche die Leitung jeweils über mehr als einen halben Umlauf umschließen, kombiniert, also axial aufeinanderfolgend an die Leitung gesetzt werden, um die Haltekraft zu erhöhen. Bevorzugt wird auf jener Seite des Wand- oder Bodenelements, welcher die erste Seitenfläche zugewandt ist, jedoch genau ein Befestigungsaufsatz auf die Leitung gesetzt.

Gemäß einer bevorzugten Ausführungsform umschließt der für sich einstückige Abschnitt des Befestigungsaufsatzes die Durchgangsöffnung über nicht mehr als 340°, in der Reihenfolge der Nennung zunehmend bevorzugt nicht mehr als 330°, 320°, 310° bzw. 300°. Dies kann ein Einklipsen der Leitung ermöglichen, bei welchem der Befestigungsaufsatz und/oder die Leitung temporär verformt wird und dann selbsttätig wieder in den Ausgangszustand strebt. Die Montage kann damit besonders einfach und schnell erfolgen, was speziell bei einer großen Zahl zu montierender Leitungen von Vorteil sein kann. Alternativ wären im Allgemeinen bspw. auch zwei über ein Filmscharnier miteinander verbundene Halbschalen möglich, die im zusammengeklappten Zustand die Durchgangsöffnung vollständig umschließen (aber nicht in sich geschlossen sind).

Beim bevorzugten Einklipsen kann bspw. die Leitung zusammengedrückt werden und sich dann selbsttätig wieder weiten. Die Leitung muss dabei nicht zwingend wieder ihren Ausgangszustand einnehmen, sie kann auch etwas zusammengedrückt bleiben. Alternativ oder zusätzlich kann beim Einklipsen der Leitung der Befestigungsaufsatz geweitet werden und sich dann selbsttätig wieder zusammenziehen, wobei auch in diesem Fall das Streben in den Ausgangszustand nicht implizieren muss, dass dieser auch wieder exakt eingenommen wird. Der Befestigungsaufsatz ist nach dem Einklipsen der Leitung formschlüssig auf dieser gehalten, aufgrund des Klipsens radial und aufgrund der Schneide axial.

Die Angaben "axial", "radial" und "umlaufend", sowie die zugehörigen Richtungen, beziehen sich generell im Rahmen dieser Offenbarung auf eine Mittenachse des Befestigungsaufsatzes, entlang welcher die Leitung diesen durchsetzt. Diese Achse kann bevorzugt die Mittenachse der vom Befestigungsaufsatz gebildeten Durchgangsöffnung sein, auf diese beziehen sich bspw. auch die vorstehend genannten Winkelangaben. Ohne ausdrücklich gegenteilige Angabe meint "innen" bzw. "nach innen" der Mittenachse radial zugewandt bzw. zu dieser hin, entsprechend meint "außen" bzw. "nach außen" der Mittenachse radial abgewandt bzw. von dieser weg.

In bevorzugter Ausgestaltung weist der Befestigungsaufsatz eine Andrückfläche auf, über welche ein Monteur Druck ausüben kann, bspw. mit seinem Daumen. Dies kann eine besonders schnelle Montage dahingehend ermöglichen, dass die Leitung mit einer Hand umschlossen und daneben der Befestigungsaufsatz aufgeklipst wird. Je nach aufzubringender Kraft kann dies einhändig oder beidhändig erfolgen, es kann also die Leitung auch axial beidseits des Befestigungsaufsatzes jeweils mit einer Hand umgegriffen und der Befestigungsaufsatz dann aufgedrückt werden. Die Andrückfläche liegt der Unterbrechung im Befestigungsaufsatz, über welche die Durchgangsöffnung des Befestigungsaufsatzes radial zugänglich ist, bevorzugt radial entgegengesetzt.

Gemäß einer bevorzugten Ausführungsform weist der Befestigungsaufsatz mehrere Durchgangsöffnungen auf, in die jeweils eine Leitung eingebracht werden kann. Diese werden bevorzugt von einem für sich einstückigen Abschnitt des Befestigungsaufsatzes gebildet, besonders bevorzugt von einem insgesamt einstückigen Befestigungsaufsatz. Jeder Durchgangsöffnung ist jeweils eine Schneide zugeordnet, welche die Mantelwand der jeweilig eingebrachten Leitung eindrückt bzw. in diese eindringt, sodass die jeweilige Leitung axial in Position gehalten wird. In seiner zumindest indirekten Anlage an der ersten Seitenfläche des Wand- oder Bodenelements hält der Befestigungsaufsatz die Leitungen dann gegen einen Zug in der zweiten Leitungsrichtung. Er weist in dieser Ausgestaltung mindestens zwei Durchgangsöffnungen auf, mögliche Obergrenzen können (davon unabhängig) bspw. bei höchstens acht, sechs, vier bzw. drei Durchgangsöffnungen liegen, besonders bevorzugt können genau zwei Durchgangsöffnungen sein. Unabhängig von der Anzahl im Einzelnen sind die Durchgangsöffnungen bevorzugt derart vorgesehen, dass ihre Mittenachsen parallel zueinander liegen.

Im Allgemeinen kann der Befestigungsaufsatz bspw. auch aus Metall vorgesehen sein, z. B. als Stanzbiegeteil. Gemäß einer bevorzugten Ausführungsform handelt es sich jedoch um einen Kunststoff-Spritzgußteil, was mit Blick auf große Stückzahlen z. B. auch ökonomische Vorteile haben kann. Bevorzugt wird auch die Schneide bzw. werden die Schneiden von demselben Kunststoffmaterial des übrigen Befestigungsaufsatzes gebildet, handelt es sich also um ein monolithisches Teil. Die Erfinder haben festgestellt, dass auch eine Kunststoff-Schneide hinreichend in den Mantel der Leitung eindringen bzw. diesen eindrücken kann, wobei z. B. im Vergleich zu einer als Einlegeteil umspritzten Metallschneide der Herstellungsaufwand verringert sein kann. Der Befestigungsaufsatz kann bspw. aus Polyamid, Acrylnitrit-Butadien-Styrol, Polypropylen oder Polycarbonat spritzgegossen sein, insbesondere Faser-, z. B. Glasfaser verstärkt.

Das Kunststoff-Spritzgußteil kann bevorzugt jeweils radial verlaufende Versteifungsrippen aufweisen, die sich jeweils axial erheben. In anderen Worten kann der Befestigungsaufsatz also mit mehreren Ausnehmungen geformt sein, die von einer Rippenstruktur gebildet werden. Dies kann im Vergleich zu einem Vollkörper z. B. aufgrund der Material- und auch Gewichtsersparnis von Vorteil sein, zugleich aber hinreichend Stabilität schaffen.

Gemäß einer bevorzugten Ausführungsform drückt die Schneide, wenn der Befestigungsaufsatz auf die Leitung gesetzt wird, die Mantelwand ein und/oder dringt sie in die Mantelwand ein. Die Eindrück- bzw. Einschnittlinie liegt dabei gewinkelt, vorzugsweise senkrecht zur Leitungs- bzw. Axialrichtung, sodass die Schneide und damit der Befestigungsaufsatz axial formschlüssig auf der Leitung sitzt.

Alternativ zu dem Eindrücken/-schneiden kann die Schneide des Befestigungsaufsatzes im Allgemeinen auch eine Erhebung der Mantelwand hintergreifen, kann nämlich die Mantelwand bspw. eine gewellte Außenwandfläche haben. Letzteres meint, dass die Außenwandfläche in einem Axialschnitt betrachtet mit Erhebungen und Vertiefungen verläuft, also wellenförmig. Im Falle des bevorzugten Hohlrohres ist die Innenwandfläche bevorzugt komplementär dazu gewellt ist. Auf einem solchen Wellrohr kann die Schneide dann axial formschlüssig zwischen zwei Erhebungen eingreifen. Bevorzugt ist gleichwohl, wie erwähnt, ein Eindrücken und/oder -schneiden der Mantelwand, weil das Hohlrohr dann z. B. auch einfach glattwandig ausgeführt sein kann, was Kostenvorteile haben bzw. weniger mit dem Befestigungsaufsatz abgestimmt sein muss.

Gemäß einer bevorzugten Ausführungsform wird die Leitung mit einem Verfüllmaterial in der Öffnung befestigt. Das Verfüllmaterial wird in einem fließfähigen, bspw. viskos-flüssigen Zustand in die Öffnung eingebracht, es legt sich bevorzugt an eine die Öffnung begrenzende Laibung und/oder die Leitung an. Im Allgemeinen kann es sich bei dem Verfüllmaterial bspw. auch um ein Silikon- oder Acrylmaterial handeln, bevorzugt ist ein Mehrkomponenten-Material, dessen Komponenten in Reaktion gebracht werden und infolgedessen bspw. einen Schaum bilden. Im Zuge des Härtens nimmt die Fließfähigkeit des Verfüllmaterials ab, es hält die Leitung in Position und/oder dichtet die Öffnung ab.

Im Allgemeinen könnte der Befestigungsaufsatz hierbei auch nachträglich aufgesetzt werden, bspw. eine zusätzliche Auszugssicherung schaffen. Bevorzugt dient er als Montagehilfe, sichert er also die Leitung gegen einen Zug in der zweiten Leitungsrichtung, während das Verfüllmaterial eingebracht wird bzw. härtet. Dabei kann von der entgegengesetzten zweiten Seite des Wand- oder Bodenelements her ein Zug auf die Leitung aufgebracht werden, bspw. mit einer während der Montage temporär aufgesetzten Spannvorrichtung, die anschließend wieder entfernt wird.

Die Spannvorrichtung kann in ihrer Axialposition auf der Leitung fixiert werden, z. B. mit einer Klemmschraube oder auch analog dem Befestigungsaufsatz mit einer Schneide, und kann dann gegenüber der zweiten Seitenfläche des Wand- oder Bodenelements verspannt werden. Dazu kann bspw. ein Schraub- oder Exzentermechanismus betätigt werden, der sich zumindest indirekt an der zweiten Seitenfläche abstützt und auf die Spannvorrichtung eine von der zweiten Seitenfläche weg, also in Richtung der zweiten Leitungsrichtung orientierte Kraft bewirkt. Mit dem Betätigen der Spannvorrichtung wird der Zug in der zweiten Leitungsrichtung aufgebracht, der den Befestigungsaufsatz in seine zumindest indirekte Anlage zieht.

Gemäß einer bevorzugten Ausführungsform wird an der zweiten Seitenfläche des Wand- oder Bodenelements eine Leitungsführung montiert, in welcher die Leitung einer definierten Krümmung folgt. Dies kann einem Unterschreiten minimaler Krümmungsradien und damit einem Abknicken der Leitung vorbeugen. Die Leitungsführung wird bevorzugt derart an der zweiten Seitenfläche montiert, dass die Öffnung in dem Wand- oder Bodenelement direkt in die Leitungsführung mündet. Der Leitungseintritt in die Leitungsführung erfolgt bevorzugt durch ein Loch in einer Bodenplatte der Leitungsführung (dieses fluchtet dann mit der Öffnung), mit welcher diese an der zweiten Seitenfläche anliegt (im Allgemeinen könnte der Leitungseintritt auch neben der Bodenplatte der Leitungsführung erfolgen).

An den Leitungseintritt schließt bevorzugt eine gekrümmte, von dem Wand- oder Bodenelement weg weisende Führung der Leitungsführung an, welche die Krümmung definiert. Im Allgemeinen können bspw. auch mehrere aufeinanderfolgend angeordnete Zapfen bzw. Stege die Führung definieren, miteinander der Leitung also ihre Krümmung vorgegeben. Bevorzugt ist eine gekrümmte Führungsfläche vorgesehen, an welche sich die Leitung anlegt. Die Leitungsführung kann an der zweiten Seitenfläche befestigt werden, im Allgemeinen bspw. auch durch Verkleben, bevorzugt durch Vernageln bzw. -schrauben. Eine Bodenplatte der Leitungsführung kann hierbei bevorzugt eine flächige Anlage an der zweiten Seitenfläche haben.

Die montierte Leitung kann sich in der Leitungsführung zunächst von der zweiten Seitenfläche weg und dann wieder zu ihr hin erstrecken. Bevorzugt tritt die Leitung an einem Leitungsaustritt parallel zur zweiten Seitenfläche aus, besonders bevorzugt in Anlage an der zweiten Seitenfläche. An die Führungsfläche bzw. Krümmung anschließend kann eine Halterung der Leitungsführung die Leitung in Richtung des Wand- oder Bodenelements drücken und damit in der gekrümmten Position halten. Die Halterung kann bspw. Teil eines Deckels sein, der aufgesetzt wird und die Leitungsführung dann abdeckt. Die Halterung kann aber auch an der Leitungsführung selbst vorgesehen sein, bspw. als Zapfen, hinter dem die Leitung eingehakt wird.

Die Leitungsführung ist bevorzugt derart ausgelegt, dass im Falle einer senkrecht in die zweite Seitenfläche mündenden Öffnung, also bei einer senkrecht in die Leitungsführung eintretenden Leitung, ein minimaler Krümmungsradius von mindestens 10 mm, 15 mm bzw. 20 mm nicht unterschritten wird (mit möglichen Obergrenzen bei bspw. höchstens 100 mm, 80 mm, 60 mm, 40 mm bzw. 30 mm). Im Falle einer schräg in die zweite Seitenfläche mündenden Leitung wird die Leitungsführung dann bevorzugt so montiert, dass eine senkrechte Projektion einer über die Öffnung hinaus verlängerten Mittenachse der Öffnung auf die zweite Seitenfläche die Führung bzw. Führungsfläche der Leitungsführung durchsetzt. Dies kann insoweit von Vorteil sein, als dann der für den senkrechten Leitungsaustritt definierte minimale Krümmungsradius nicht unterschritten wird, die Leitung also beim Eintritt in die Leitungsführung nicht übermäßig gekrümmt bzw. geknickt wird.

Aufgrund der Krümmung und in Kombination mit der Halterung kann die Leitungsführung auch einen gewissen Zug auf die Leitung ausüben, also auf der anderen Seite den Befestigungsaufsatz in seine zumindest indirekte Anlage an der ersten Seitenfläche ziehen. Der Befestigungsaufsatz und die Leitungsführung können damit auch für sich eine hinreichende Befestigung der Leitung schaffen, bspw. auch ohne Verfüllen der Öffnung. Andererseits kann die Leitungsführung aber auch beim Verfüllen als Spannvorrichtung dienen, wobei sie dann bevorzugt auch danach in Position bleibt, also nicht wieder abgenommen wird. Alternativ kann die Leitungsführung aber auch erst nach Befestigen, insbesondere nach dem Verfüllen der Öffnung montiert werden, also der mit dem Verfüllmaterial befestigten Leitung dann eine definierte Krümmung vorgeben und zugleich die Öffnung abdecken.

Bei einer bevorzugten Leitungsführung ist ein Randabschnitt über eine Sollbruchstelle abtrennbar, sodass sich die Leitungsführung bedarfsweise näher an einer Kante platzieren lässt. Wird die Leitung bspw. in einer Öffnung in einem Wandelement befestigt, so kann die Kante am Übergang zu einer angrenzenden Wand oder Decke liegen, bevorzugt liegt sie am Übergang zwischen Boden und Wandelement. Wenn die Leitung bspw. gebäudeaußenseitig im Erdreich verläuft und die Öffnung die Gebäudeaußenwand schräg nach oben durchsetzt, sodass sie ebenerdig mündet, lässt sich die vertikale Höhe der Mündung vorab nicht immer exakt bestimmen. Liegt die Mündung nun sehr nahe bzw. im Übergang zwischen Gebäudewand und Bodenfläche, kann der Randabschnitt der Leitungsführung abgetrennt und die Leitungsführung somit gleichwohl genutzt werden. Liegt die Mündung hingegen in der Fläche, kann der Randabschnitt verbleiben.

Bevorzugt ist bzw. wird die Leitungsführung mit einer Abdeckung versehen, welche die in der Leitungsführung geführte Leitung in Richtung von der zweiten Seitenfläche weg abdeckt. Diese Abdeckung kann einstückig mit der Leitungsführung vorgesehen sein, bspw. über ein Filmscharnier damit verbunden. Bevorzugt ist ein mehrteiliger Aufbau und wird die Abdeckung, nachdem die Leitung in der Leitungsführung verlegt wurde, auf Letztere aufgesetzt. Die Befestigung könnte auch mittels Verschrauben erfolgen, mit Blick auf eine einfache Montage ist eine formschlüssig an der Leitungsführung gehaltene Abdeckung bevorzugt.

Alternativ oder auch zusätzlich zu der Leitungsführung mit über eine Sollbruchstelle abtrennbarem Randabschnitt kann auch die Abdeckung mit einem Randabschnitt vorgesehen sein, der über eine Sollbruchstelle abtrennbar ist. Der Randabschnitt der Abdeckung kann für eine kantennahe Platzierung (siehe vorne) abgetrennt werden, sodass die Abdeckung bspw. im Falle einer bodennah mündenden Öffnung an den Fußboden grenzend platziert werden kann.

Eine vorliegend diskutierte "Leitungsführung" kann auch unabhängig von der hauptanspruchsgemäßen Befestigung der Leitung mittels des Befestigungsaufsatzes von Interesse sein und ist entsprechend Gegenstand der Offenbarung. Die Leitung kann sich also durch eine Öffnung in einem Wand- oder Bodenelement hindurcherstrecken, wobei auf eine Seite des Wand- oder Bodenelements in einer vorstehend geschilderten Weise ein Befestigungsaufsatz gesetzt und die Leitung eingelegt wird. An der entgegengesetzten Seite des Wand- oder Bodenelements kann die Leitung anderweitig befestigt sein bzw. werden; sie kann bspw. auch über ein in den Ringraum in der Öffnung eingebrachtes Vergussmaterial befestigt werden. Bevorzugt kann auch eine Variante mit zwei Leitungsführungen sein, wobei auf jeder Seite des Wand- oder Bodenelements eine Leitungsführung angeordnet wird. Diese halten die Leitung dann gemeinsam. Dabei kann sich die Leitung insbesondere auch schräg durch das Wand- oder Bodenelement erstrecken, wobei die beiden Leitungsführungen dann bevorzugt gespiegelt zueinander angeordnet werden. Die Leitungsführungen können also insbesondere so platziert werden, dass sich ihre Führungsflächen zueinander entgegengesetzt erstrecken (also in zwei zueinander entgegengesetzten, aber jeweils zu den Seitenflächen des Wand- oder Bodenelements parallelen Richtungen).

Gemäß einer bevorzugten Ausführungsform liegt der Befestigungsaufsatz nur indirekt an der ersten Seitenfläche des Wand- oder Bodenelements an, ist nämlich dazwischen noch ein auf der Leitung angeordnetes Gelenkteil vorgesehen. Dieses hat eine gekrümmte Lagerfläche, was eine verkippbare Lagerung schafft. Im einfachsten Fall kann die Lagerfläche auch direkt an dem Wand- oder Bodenelement anliegen, also an dem in der ersten Seitenfläche liegenden Rand der Öffnung. Das kann einen besonders einfachen Aufbau ergeben, wobei z. B. eine sphärische Lagerfläche bei kleinen Verkippwinkeln auch noch eine hinreichend gute Anlage schafft (mit zunehmender Verkippung wird der Rand einer kreisrunden Öffnung zunehmend elliptisch).

Das Gelenkteil weist eine Durchlassöffnung auf, durch welche dann die Leitung verläuft. Im Allgemeinen könnte das Gelenkteil auch mehrteilig aufgebaut sein und an der Leitung zusammengesetzt werden, mit Blick auf einen möglichst einfachen Aufbau ist es jedoch bevorzugt einstückig, insbesondere monolithisch. Die Leitung wird bevorzugt durch die Durchlassöffnung hindurchgefädelt, die Axialfixierung schafft dann die Anlage am Befestigungsaufsatz. Das Gelenkteil kann analog dem Befestigungsaufsatz auch eine Mehrzahl Durchlassöffnungen aufweisen, also mindestens zwei und bspw. nicht mehr als acht, sechs, vier bzw. drei Durchlassöffnungen, besonders bevorzugt sind Varianten mit zwei oder genau einer Durchlassöffnung (Gleiches gilt für den Befestigungsaufsatz).

Gemäß einer bevorzugten Ausführungsform ist zwischen dem Gelenkteil und der ersten Seitenfläche des Wand- oder Bodenelements ein Flanschelement angeordnet, an welchem das Gelenkteil verkippbar gelagert ist. Die beiden können bspw. mit zylindrischen Lagerflächen ein Kniegelenk bilden, bevorzugt sind sphärische Lagerflächen, bilden das Gelenkteil und das Flanschelement also ein Kugelgelenk. Das Gelenkteil kann an dem Flanschelement auch lediglich anliegen, also dann im montierten Zustand von dem Befestigungsaufsatz dagegen gedrückt werden, im Übrigen aber lose sein. Bevorzugt ist das Gelenkteil an dem Flanschelement jedoch formschlüssig gehalten, was bspw. auch die Montage vereinfachen kann. Auch unabhängig von der Art der Befestigung am Gelenkteil überragt das Flanschelement den Rand der Öffnung bevorzugt, bedeckt es diese also gemeinsam mit dem Gelenkteil. Das Flanschelement hat bevorzugt eine um die Öffnung umlaufende Anlagefläche an der ersten Seitenfläche.

Die Öffnung in dem Wand- oder Bodenelement kann bspw. einen Durchmesser von höchstens 50 mm, 40 mm, 30 mm bzw. 25 mm haben, wobei mögliche Untergrenzen bspw. bei mindestens 10 mm bzw. 15 mm liegen können. Besonders bevorzugt können Öffnungsdurchmesser von 20 mm sein. Die Öffnung ist bzw. wird bevorzugt als Bohrung in das Wand- oder Bodenelement eingebracht. Bei Letzterem handelt es sich vorzugsweise um ein Gebäudeelement, besonders bevorzugt um eine Gebäudewand, insbesondere ein Gebäudeaußenwand. Eine schräge, also nicht senkrechte Erstreckung der Öffnung kann generell bevorzugt sein, im Falle der Gebäudeaußenwand mündet die Öffnung bevorzugt gebäudeinnenseitig höher als gebäudeaußenseitig. Besonders bevorzugt mündet sie gebäudeaußenseitig auf einer vertikalen Höhe innerhalb des Erdreichs und gebäudeinnenseitig oberhalb des Fußbodens.

Die Erfindung betrifft auch eine Leitungsdurchführung mit einer Leitung, die in einer Öffnung in einem Wand- oder Bodenelement befestigt ist, und zwar in einer vorstehend beschriebenen Weise mittels eines Befestigungsaufsatzes. Dessen Schneide ist in die Mantelwand der Leitung eingedrückt bzw. bevorzugt eingedrungen und legt den Befestigungsaufsatz in seiner Axialposition fest. Die zumindest indirekte Anlage des Befestigungsaufsatzes an der ersten Seitenfläche sichert die Leitung gegen einen Zug in der zweiten Leitungsrichtung. Bezüglich weiterer Details wird ausdrücklich auf die übrige Offenbarung verwiesen, die beschriebenen Verfahrensschritte sind insofern auch auf Product by Process-Merkmale zu lesen.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Leitungsanordnung mit einer erfindungsgemäß in einer Öffnung befestigten Leitung;
- Figur 2: einen Befestigungsaufsatz mit einer Schneide, der bei der Befestigung der Leitung gemäß Figur 1 Anwendung findet;
- Figur 3: einen für zwei Leitungen ausgelegten Befestigungsaufsatz;
- Figur 4: als Alternative zu Figur 2 einen Befestigungsaufsatz, der für eine Leitung mit größerem Durchmesser ausgelegt ist;
- Figur 5: eine Leitungsführung, die an einer dem Befestigungsaufsatz entgegengesetzten Seitenfläche des Wand- oder Bodenelements angeordnet wird;
- Figur 6: eine Abdeckung der Leitungsführung gemäß Figur 5;
- Figur 7: die auf die Leitungsführung gemäß Figur 5 aufgesetzte Abdeckung gemäß Figur 6.

### Bevorzugte Ausführung der Erfindung

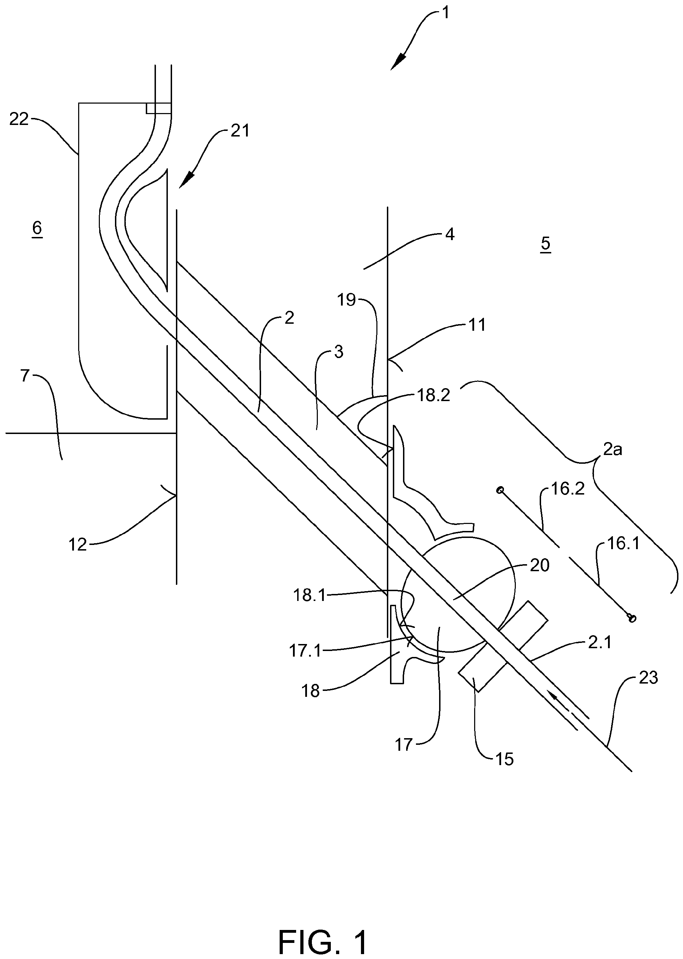

Figur 1 zeigt eine Leitungsanordnung 1, nämlich eine Leitung 2, die in einer Öffnung 3 in einem Wand- oder Bodenelement 4 befestigt wurde, vorliegend in einer Gebäudeaußenwand. Die Öffnung 3 ist als Bohrung eingebracht und durchsetzt die Gebäudewand schräg, sodass die Leitung 2 auf der Gebäudeaußenseite 5 im Erdreich verläuft und auf der Gebäudeinnenseite 6 ebenerdig, also oberhalb eines Fußbodens 7 austritt.

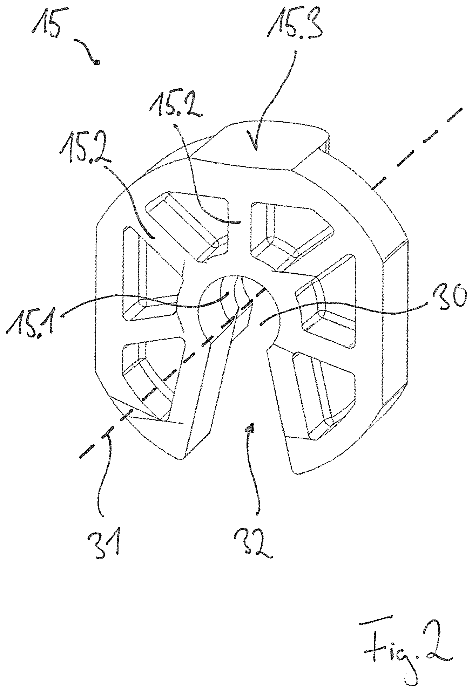

An einer ersten Seitenfläche 11 des Wand- oder Bodenelements ist zur Befestigung der Leitung 2 ein Befestigungsaufsatz 15 auf die Leitung 2 gesetzt, und zwar auf einen außerhalb der Öffnung 3 angeordneten Befestigungsabschnitt 2a der Leitung 2. Bei der Leitung 2 handelt es sich um ein Hohlrohr, dessen Mantelwand 2.1 aus einem Kunststoffmaterial vorgesehen ist. In dieses dringt eine Schneide des Befestigungsaufsatzes 15 ein (vergleiche die Figuren 2 bis 4 bzgl. der Schneide), sodass der Befestigungsaufsatz 15 in seiner Axialposition auf der Leitung 2 festgelegt ist. Die Befestigungsaufsatz 15 stützt sich dann indirekt an der ersten Seitenfläche 11 des Wand- oder Bodenelements 4 ab, hält also die Leitung 2 gegen einen Zug in der zweiten Leitungsrichtung 16.2 (in der entgegengesetzten, ersten Leitungsrichtung 16.1 steht der Befestigungsabschnitt 2a aus der Öffnung 3 hervor).

Der Befestigungsaufsatz 15 liegt dabei nur indirekt an der ersten Seitenfläche 11 an, dazwischen finden sich ein Gelenkteil 17 und ein Flanschelement 18. Das Gelenkteil 17 und das Flanschelement 18 haben jeweils eine sphärische Lagerfläche 17.1, 18.1, diese Lagerflächen 17.1, 18.1 bilden miteinander ein Kugellager. Das Gelenkteil 17 ist relativ zu dem Flanschelement 18 und damit insbesondere zu dessen Anlagefläche 18.2 verkippbar gelagert, was eine Anpassung an unterschiedliche Winkel 19 ermöglicht.

In dem Gelenkteil 17 ist eine Durchlassöffnung 20 vorgesehen, durch diese wird die Leitung 2 hindurchgefädelt. Das Flanschelement 18 ist hierbei bereits formschlüssig an dem Gelenkteil 17 gehalten. Der Befestigungsaufsatz 15 legt das Gelenkteil 17 und das Flanschelement 18 in ihrer Axialposition auf der Leitung 2 fest, schafft also bezogen auf die erste Leitungsrichtung 16.1 einen Anschlag. Nach dem Hindurchfädeln der Leitung 2 bzw. Auffädeln des Gelenkteils 17 rutscht dieses samt Flanschelement 18 in der ersten Leitungsrichtung 16.1 entlang der Leitung 2, bis es an dem Befestigungsaufsatz 15 anliegt.

Auf der Gebäudeinnenseite 6 ist an der zweiten Seitenfläche 12 eine Leitungsführung 21 montiert, in welcher der Leitung 2 eine definierte Krümmung vorgegeben wird, bevor sich die Leitung 2 parallel zu der zweiten Seitenfläche 12 erstreckt. In einer einfachen Variante kann die Leitungsführung 21 den Zug in der zweiten Leitungsrichtung 6.2 aufbringen, also gemeinsam mit dem Befestigungsaufsatz 15 die Befestigung der Leitung 2 schaffen. Die Öffnung 3 kann jedoch zusätzlich auch mit einem Verfüllmaterial (nicht dargestellt) aufgefüllt werden, welches den Ringraum um die Leitung 2 verschließt. Die Leitungsführung 21 kann in diesem Fall auch erst nachträglich angesetzt werden und einen knickfreien Verlauf der Leitung 2 sicherstellen.

Nachdem die Leitung 2 in der Öffnung 3 befestigt ist, wird bevorzugt von der Gebäudeaußenseite 5 her ein Datenkabel 23 eingeblasen, vorzugsweise ein Glasfaserkabel. Aufgrund der zuverlässigen Befestigung der Leitung 2 bzw. der eingehaltenen Mindestkrümmungsradien in der Führungsvorrichtung 21 kann hierbei einer Beschädigung des Datenkabels 23 vorgebeugt werden, insbesondere einem Abknicken.

Figur 2 zeigt einen Befestigungsaufsatz 15 in einer Einzeldarstellung, und zwar in einer Schrägansicht. Der Befestigungsaufsatz 15 bildet eine Durchgangsöffnung 30, er umschließt diese über rund 300° (bezogen auf eine Mittenachse 31 der Durchgangsöffnung 30). Durch die Unterbrechung 32 kann die Leitung 2 eingeklipst werden, wobei die Leitung 2 temporär etwas zusammengedrückt wird. In der Durchgangsöffnung 30 dringt dann die Schneide 15.1 in die Mantelwand 2.1 der Leitung 2 ein, was die Axialfixierung schafft. Dabei durchsetzt sie die Mantelwand 2.1 aber nicht.

Die Schneide 15.1 ist vorliegend monolithisch mit dem übrigen Befestigungsaufsatz 15 ausgebildet, dieser wird als Kunststoff-Spritzgußteil samt Schneide 15.1 hergestellt. Um eine hinreichende Anpresskraft auf die Leitung 2 sicherzustellen, ist der Befestigungsaufsatz 15 ferner mit Versteifungsrippen 15.2 geformt. Der Unterbrechung 32 radial entgegengesetzt ist eine Andrückfläche 15.3 geformt, über welche ein Monteur beim Einklipsen der Leitung 2 Druck auf den Befestigungsaufsatz 15 ausüben kann.

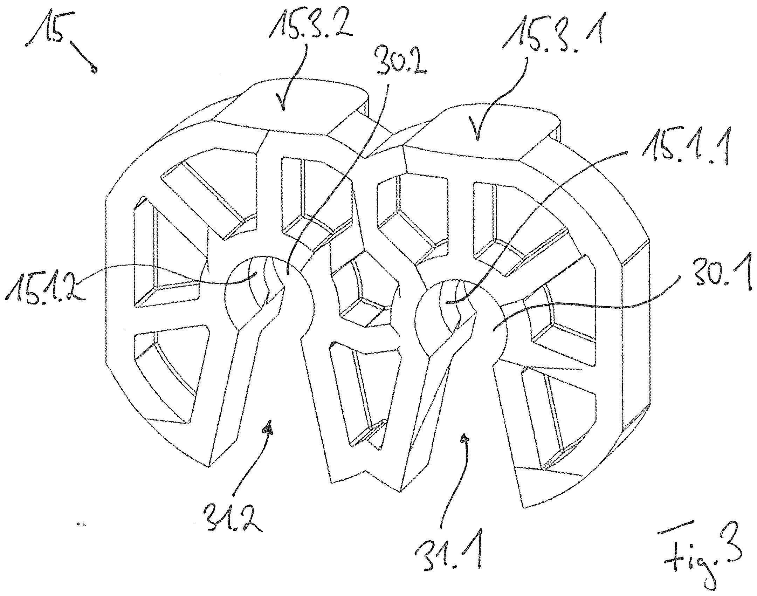

Figur 3 zeigt einen weiteren Befestigungsaufsatz 15, der im Unterschied zu der Variante gemäß Figur 2 für zwei Leitungen ausgelegt ist, also zwei Durchgangsöffnungen 30.1, 30.2 bildet. Diese sind wiederum jeweils über eine Unterbrechung 31.1, 31.2 zum Einklipsen der jeweiligen Leitung zugänglich, in jeder der Durchgangsöffnungen 30.1, 30.2 findet sich eine Schneide 15.1.1, 15.1.2. Ferner ist dieser Befestigungsaufsatz 15 mit zwei Andrückflächen 15.3.1, 15.3.2 vorgesehen, sodass für jede Durchgangsöffnung 30.1, 30.2 die Anpresskraft beim Einklipsen der jeweiligen Leitung optimal aufgebracht werden kann.

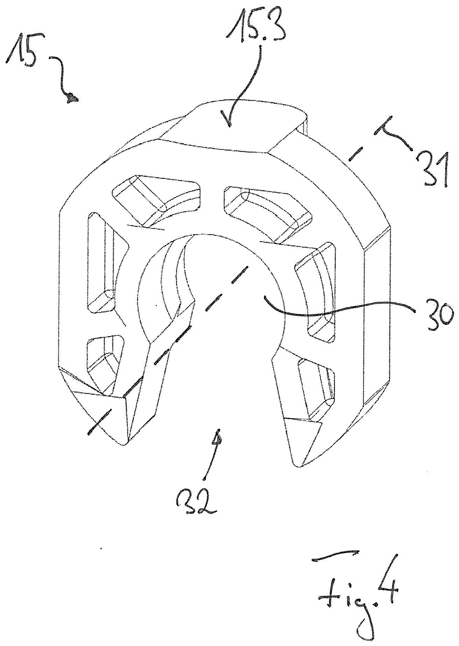

Figur 4 zeigt einen weiteren Befestigungsaufsatz 15, der analog der Variante gemäß Figur 2 nur eine einzige Durchgangsöffnung 30 aufweist. Der Befestigungsaufsatz 15 gemäß Figur 4 ist für eine Leitung 2 mit größerem Durchmesser ausgelegt, es sind also die Durchgangsöffnung 30 und auch die Unterbrechung 32 entsprechend größer bemessen.

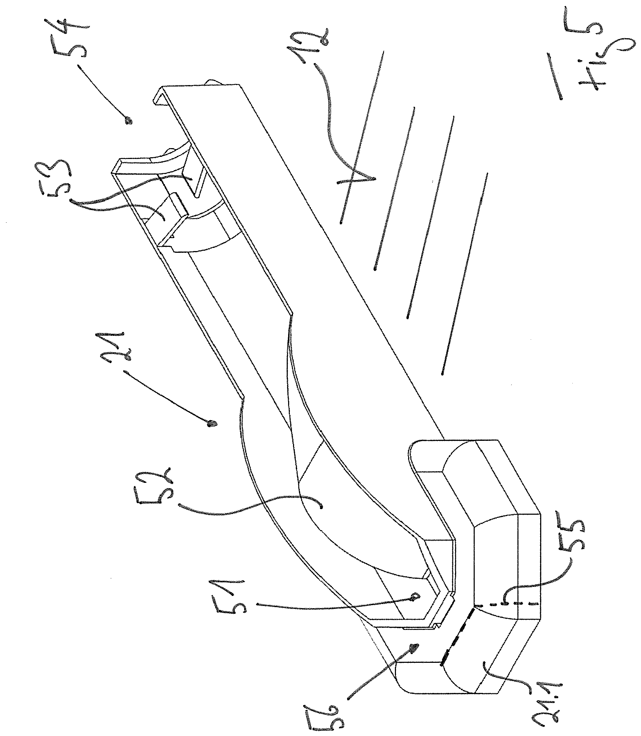

Figur 5 zeigt die Leitungsführung 21 in einer Schrägansicht, wobei der Blick schräg auf die zweite Seitenfläche 12 des Wand- oder Bodenelements 4 fällt. Zu erkennen ist ein Leitungseintritt 51, an dem die hier nicht dargestellte Leitung aus der Öffnung 3 in die Leitungsführung 21 eintritt. Daran anschließend findet sich eine Führungsfläche 52, welche der Leitung eine definierte Krümmung vorgibt. Daran anschließend finden sich Halteelemente 53, welche die Leitung an die Führungsfläche 52 drücken, diese also halten und zugleich einen seitenflächenparallelen Austritt der Leitung sicherstellen, nämlich am Leitungsaustritt 54.

Ein Randabschnitt 21.1 der Leitungsführung 21 ist über eine Sollbruchstelle 55 abtrennbar, sodass die Leitungsführung 21 bedarfsweise kantennah platziert werden kann. In dem Beispiel gemäß Figur 1 könnte die Leitungsführung 21 somit näher am Fußboden 7 platziert werden, wenn die Öffnung 3 entsprechend bodennah münden würde.

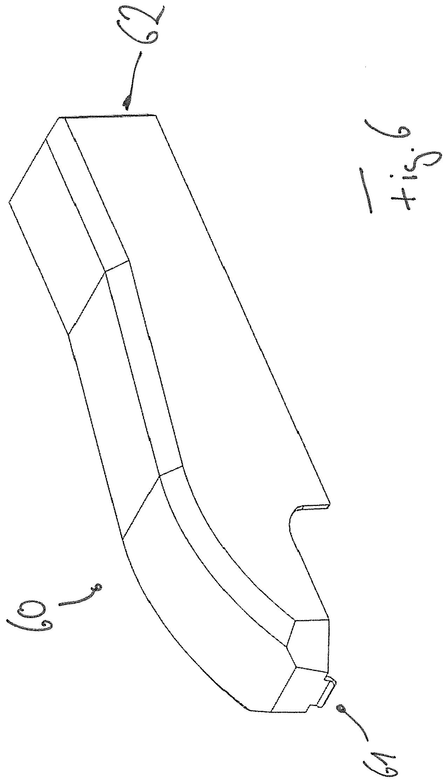

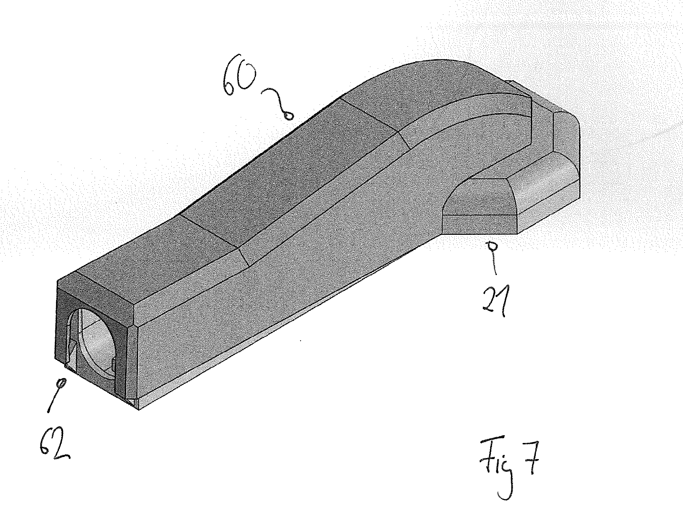

Figur 6 zeigt eine Abdeckung 60, die auf die Leitungsführung 21 aufgeklipst werden kann. Dazu weist die Abdeckung 60 einen Haken 61 auf, der schräg in eine Öffnung 56 der Leitungsführung 21 eingebracht wird, bevor rückseitige Rastelemente 62 ineinandergreifen, vergleiche auch Figur 7. Diese zeigt die Leitungsführung 21 mit aufgesetzter und verrasteter Abdeckung 60.

## Patentansprüche

1. Verfahren zum Befestigen einer Leitung (2) in einer Öffnung (3) in einem Wand- oder Bodenelement (4), wobei eine Mantelwand (2.1) der Leitung (2) aus einem Kunststoffmaterial vorgesehen ist,
bei welchem Verfahren
- ein Befestigungsaufsatz (15) vorgesehen wird, der eine Schneide (15.1) aufweist;
- der Befestigungsaufsatz (15) in einem Befestigungsabschnitt (2a) der Leitung (2) solchermaßen auf die Leitung (2) gesetzt wird, dass die Schneide (15.1) axial formschlüssig auf der Leitung (2) sitzt und damit der Befestigungsaufsatz (15) in seiner Axialposition an der Leitung (2) festgelegt ist;
- der Befestigungsaufsatz (15) in eine zumindest indirekte Anlage an einer ersten Seitenfläche (11) des Wand- oder Bodenelements (4), an welcher der Befestigungsabschnitt (2a) der Leitung (2) in einer ersten Leitungsrichtung aus der Öffnung (3) hervorsteht, gebracht wird, sodass die Leitung (2) gegen einen Zug in einer zweiten, der ersten (16.1) entgegengesetzten Leitungsrichtung (16.2) gesichert ist.

2. Verfahren nach Anspruch 1, bei welchem ein für sich einstückiger Abschnitt des Befestigungsaufsatzes (15) eine Durchgangsöffnung (30) bildet, in welche beim Aufsetzen des Befestigungsaufsatzes (15) die Leitung (2) eingebracht wird, wobei der für sich einstückige Abschnitt des Befestigungsaufsatzes (15) die Durchgangsöffnung (30) über mehr als einen halben Umlauf umschließt, dabei jedoch nicht in sich geschlossen ist.

3. Verfahren nach Anspruch 2, bei welchem der für sich einstückige Abschnitt des Befestigungsaufsatzes die Durchgangsöffnung (30) über mindestens 220° und nicht mehr als 340° umschließt.

4. Verfahren nach einem der vorstehenden Ansprüche, bei welchem das Aufsetzen des Befestigungsaufsatzes (15) ein Einklipsen der Leitung (2) ist, also der Befestigungsaufsatz (15) und/oder die Leitung (2) beim Aufsetzen temporär aus einem Ausgangszustand verformt wird und dann selbsttätig wieder in diesen Ausgangszustand strebt.

5. Verfahren nach Anspruch 4, bei welchem ein Monteur die Leitung (2) beim Einklipsen mit einer Hand umschließt und daneben den Befestigungsaufsatz (15) andrückt, und zwar mit seinem Daumen dieser oder der anderen Hand auf eine Andrückfläche (15.3) des Befestigungsaufsatzes (15) drückt und damit die Leitung (2) einklipst.

6. Verfahren nach einem der vorstehenden Ansprüche, bei welchem der Befestigungsaufsatz (15) eine Mehrzahl Durchgangsöffnungen (30.1, 30.2) bildet, in die jeweils eine Leitung (2) eingebracht wird.

7. Verfahren nach einem der vorstehenden Ansprüche, bei welchem der Befestigungsaufsatz (15) ein Kunststoff-Spritzgussteil ist.

8. Verfahren nach einem der vorstehenden Ansprüche, bei welchem die Schneide (15.1) des Befestigungsaufsatzes (15), wenn dieser auf die Leitung (2) gesetzt wird, die Mantelwand (2.1) eindrückt und/oder in die Mantelwand (2.1) eindringt.

9. Verfahren nach einem der vorstehenden Ansprüche, bei welchem die Leitung (2), wenn sich der Befestigungsaufsatz (15) in der zumindest indirekten Anlage an der ersten Seitenfläche (11) des Wand- oder Bodenelements (4) befindet, mit einem Verfüllmaterial in der Öffnung (3) befestigt wird, indem das Verfüllmaterial in einem fließfähigen Zustand in die Öffnung (3) eingebracht wird und dann härtet und die Leitung (2) hält.

10. Verfahren nach einem der vorstehenden Ansprüche, bei welchem an einer der ersten Seitenfläche (11) entgegengesetzten zweiten Seitenfläche (12) des Wand- oder Bodenelements (4) eine Leitungsführung (21) montiert wird, in welcher die Leitung (2) einer definierten Krümmung folgt und dann an einem Leitungsaustritt (54) austritt, um die Leitungsführung dann bevorzugt parallel zu der zweiten Seitenfläche (12) zu verlassen.

11. Verfahren nach Anspruch 10, bei welcher die Leitungsführung (21) einen Randabschnitt (21.1) aufweist, der für eine kantennahe Platzierung der Leitungsführung (21) über eine Sollbruchstelle (55) abtrennbar ist.

12. Verfahren nach einem der vorstehenden Ansprüche, bei welchem der Befestigungsaufsatz (15) an der ersten Seitenfläche des Wand- oder Bodenelements (4) indirekt anliegt, nämlich der Befestigungsaufsatz (15) ein auf der Leitung (2) angeordnetes Gelenkteil (17) in der zweiten Leitungsrichtung (16.2) zu der ersten Seitenfläche (11) andrückt.

13. Verfahren nach Anspruch 12, bei welchem zwischen der ersten Seitenfläche (11) und dem Gelenkteil (17) ein Flanschelement (18) angeordnet ist, an welchem das Gelenkteil (17) verkippbar gelagert ist.

14. Leitungsanordnung (1) mit einer Leitung (2) in einer Öffnung (3) in einem Wand- oder Bodenelement (4), wobei die Leitung (2) in einem Verfahren nach einem der vorstehenden Ansprüche in der Öffnung (3) befestigt wurde.

15. Verwendung eines Befestigungsaufsatzes (15) mit einer Scheide (15.1) und/oder einer Leitung (2) für eine Leitungsanordnung nach Anspruch 14.

## Geänderte Patentansprüche

### Geänderte Patentansprüche gemäss Regel 137(2) EPÜ.

**1.** Verfahren zum Befestigen einer Leitung (2) in einer Öffnung (3) in einem Wand- oder Bodenelement (4), wobei eine Mantelwand (2.1) der Leitung (2) aus einem Kunststoffmaterial vorgesehen ist,
bei welchem Verfahren
- ein Befestigungsaufsatz (15) vorgesehen wird, der eine Schneide (15.1) aufweist;
- der Befestigungsaufsatz (15) in einem Befestigungsabschnitt (2a) der Leitung (2) solchermaßen seitlich auf die Leitung (2) gesetzt wird, dass die Schneide (15.1) axial formschlüssig auf der Leitung (2) sitzt und damit der Befestigungsaufsatz (15) in seiner Axialposition an der Leitung (2) festgelegt ist;
- der Befestigungsaufsatz (15) in eine zumindest indirekte Anlage an einer ersten Seitenfläche (11) des Wand- oder Bodenelements (4), an welcher der Befestigungsabschnitt (2a) der Leitung (2) in einer ersten Leitungsrichtung aus der Öffnung (3) hervorsteht, gebracht wird, sodass die Leitung (2) gegen einen Zug in einer zweiten, der ersten (16.1) entgegengesetzten Leitungsrichtung (16.2) gesichert ist.

**2.** Verfahren nach Anspruch 1, bei welchem ein für sich einstückiger Abschnitt des Befestigungsaufsatzes (15) eine Durchgangsöffnung (30) bildet, in welche beim Aufsetzen des Befestigungsaufsatzes (15) die Leitung (2) eingebracht wird, wobei der für sich einstückige Abschnitt des Befestigungsaufsatzes (15) die Durchgangsöffnung (30) über mehr als einen halben Umlauf umschließt, dabei jedoch nicht in sich geschlossen ist.

**3.** Verfahren nach Anspruch 2, bei welchem der für sich einstückige Abschnitt des Befestigungsaufsatzes die Durchgangsöffnung (30) über mindestens 220° und nicht mehr als 340° umschließt.

**4.** Verfahren nach einem der vorstehenden Ansprüche, bei welchem das Aufsetzen des Befestigungsaufsatzes (15) ein Einklipsen der Leitung (2) ist, also der Befestigungsaufsatz (15) und/oder die Leitung (2) beim Aufsetzen temporär aus einem Ausgangszustand verformt wird und dann selbsttätig wieder in diesen Ausgangszustand strebt.

**5.** Verfahren nach Anspruch 4, bei welchem ein Monteur die Leitung (2) beim Einklipsen mit einer Hand umschließt und daneben den Befestigungsaufsatz (15) andrückt, und zwar mit seinem Daumen dieser oder der anderen Hand auf eine Andrückfläche (15.3) des Befestigungsaufsatzes (15) drückt und damit die Leitung (2) einklipst.

**6.** Verfahren nach einem der vorstehenden Ansprüche, bei welchem der Befestigungsaufsatz (15) eine Mehrzahl Durchgangsöffnungen (30.1, 30.2) bildet, in die jeweils eine Leitung (2) eingebracht wird.

**7.** Verfahren nach einem der vorstehenden Ansprüche, bei welchem der Befestigungsaufsatz (15) ein Kunststoff-Spritzgussteil ist.

**8.** Verfahren nach einem der vorstehenden Ansprüche, bei welchem die Schneide (15.1) des Befestigungsaufsatzes (15), wenn dieser auf die Leitung (2) gesetzt wird, die Mantelwand (2.1) eindrückt und/oder in die Mantelwand (2.1) eindringt.

**9.** Verfahren nach einem der vorstehenden Ansprüche, bei welchem die Leitung (2), wenn sich der Befestigungsaufsatz (15) in der zumindest indirekten Anlage an der ersten Seitenfläche (11) des Wand- oder Bodenelements (4) befindet, mit einem Verfüllmaterial in der Öffnung (3) befestigt wird, indem das Verfüllmaterial in einem fließfähigen Zustand in die Öffnung (3) eingebracht wird und dann härtet und die Leitung (2) hält.

**10.** Verfahren nach einem der vorstehenden Ansprüche, bei welchem an einer der ersten Seitenfläche (11) entgegengesetzten zweiten Seitenfläche (12) des Wand- oder Bodenelements (4) eine Leitungsführung (21) montiert wird, in welcher die Leitung (2) einer definierten Krümmung folgt und dann an einem Leitungsaustritt (54) austritt, um die Leitungsführung dann bevorzugt parallel zu der zweiten Seitenfläche (12) zu verlassen.

**11.** Verfahren nach Anspruch 10, bei welcher die Leitungsführung (21) einen Randabschnitt (21.1) aufweist, der für eine kantennahe Platzierung der Leitungsführung (21) über eine Sollbruchstelle (55) abtrennbar ist.

**12.** Verfahren nach einem der vorstehenden Ansprüche, bei welchem der Befestigungsaufsatz (15) an der ersten Seitenfläche des Wand- oder Bodenelements (4) indirekt anliegt, nämlich der Befestigungsaufsatz (15) ein auf der Leitung (2) angeordnetes Gelenkteil (17) in der zweiten Leitungsrichtung (16.2) zu der ersten Seitenfläche (11) andrückt.

**13.** Verfahren nach Anspruch 12, bei welchem zwischen der ersten Seitenfläche (11) und dem Gelenkteil (17) ein Flanschelement (18) angeordnet ist, an welchem das Gelenkteil (17) verkippbar gelagert ist.

**14.** Leitungsanordnung (1) mit einer Leitung (2) in einer Öffnung (3) in einem Wand- oder Bodenelement (4), wobei die Leitung (2) in einem Verfahren nach einem der vorstehenden Ansprüche in der Öffnung (3) befestigt wurde.

**15.** Verwendung eines Befestigungsaufsatzes (15) mit einer Scheide (15.1) und/oder einer Leitung (2) für eine Leitungsanordnung nach Anspruch 14.

**1.** Verfahren zum Befestigen einer Leitung (2) in einer Öffnung (3) in einem Wand- oder Bodenelement (4), wobei eine Mantelwand (2.1) der Leitung (2) aus einem Kunststoffmaterial vorgesehen ist,
bei welchem Verfahren
- ein Befestigungsaufsatz (15) vorgesehen wird, der eine Schneide (15.1) aufweist, wobei ein für sich einstückiger Abschnitt des Befestigungsaufsatzes (15) eine Durchgangsöffnung (30) bildet und wobei der für sich einstückige Abschnitt des Befestigungsaufsatzes (15) die Durchgangsöffnung (30) über mehr als einen halben Umlauf umschließt, dabei jedoch nicht in sich geschlossen ist,
- der Befestigungsaufsatz (15) in einem Befestigungsabschnitt (2a) der Leitung (2) solchermaßen seitlich auf die Leitung (2) gesetzt wird, dass die Schneide (15.1) axial formschlüssig auf der Leitung (2) sitzt und damit der Befestigungsaufsatz (15) in seiner Axialposition an der Leitung (2) festgelegt ist;
- der Befestigungsaufsatz (15) in eine zumindest indirekte Anlage an einer ersten Seitenfläche (11) des Wand- oder Bodenelements (4), an welcher der Befestigungsabschnitt (2a) der Leitung (2) in einer ersten Leitungsrichtung aus der Öffnung (3) hervorsteht, gebracht wird, sodass die Leitung (2) gegen einen Zug in einer zweiten, der ersten (16.1) entgegengesetzten Leitungsrichtung (16.2) gesichert ist.

**2.** Verfahren nach Anspruch 1, bei welchem der für sich einstückige Abschnitt des Befestigungsaufsatzes die Durchgangsöffnung (30) über mindestens 220° und nicht mehr als 340° umschließt.

**3.** Verfahren nach einem der vorstehenden Ansprüche, bei welchem das Aufsetzen des Befestigungsaufsatzes (15) ein Einklipsen der Leitung (2) ist, also der Befestigungsaufsatz (15) und/oder die Leitung (2) beim Aufsetzen temporär aus einem Ausgangszustand verformt wird und dann selbsttätig wieder in diesen Ausgangszustand strebt.

**4.** Verfahren nach Anspruch 3, bei welchem ein Monteur die Leitung (2) beim Einklipsen mit einer Hand umschließt und daneben den Befestigungsaufsatz (15) andrückt, und zwar mit seinem Daumen dieser oder der anderen Hand auf eine Andrückfläche (15.3) des Befestigungsaufsatzes (15) drückt und damit die Leitung (2) einklipst.

**5.** Verfahren nach einem der vorstehenden Ansprüche, bei welchem der Befestigungsaufsatz (15) eine Mehrzahl Durchgangsöffnungen (30.1, 30.2) bildet, in die jeweils eine Leitung (2) eingebracht wird.

**6.** Verfahren nach einem der vorstehenden Ansprüche, bei welchem der Befestigungsaufsatz (15) ein Kunststoff-Spritzgussteil ist.

**7.** Verfahren nach einem der vorstehenden Ansprüche, bei welchem die Schneide (15.1) des Befestigungsaufsatzes (15), wenn dieser auf die Leitung (2) gesetzt wird, die Mantelwand (2.1) eindrückt und/oder in die Mantelwand (2.1) eindringt.

**8.** Verfahren nach einem der vorstehenden Ansprüche, bei welchem die Leitung (2), wenn sich der Befestigungsaufsatz (15) in der zumindest indirekten Anlage an der ersten Seitenfläche (11) des Wand- oder Bodenelements (4) befindet, mit einem Verfüllmaterial in der Öffnung (3) befestigt wird, indem das Verfüllmaterial in einem fließfähigen Zustand in die Öffnung (3) eingebracht wird und dann härtet und die Leitung (2) hält.

**9.** Verfahren nach einem der vorstehenden Ansprüche, bei welchem an einer der ersten Seitenfläche (11) entgegengesetzten zweiten Seitenfläche (12) des Wand- oder Bodenelements (4) eine Leitungsführung (21) montiert wird, in welcher die Leitung (2) einer definierten Krümmung folgt und dann an einem Leitungsaustritt (54) austritt, um die Leitungsführung dann bevorzugt parallel zu der zweiten Seitenfläche (12) zu verlassen.

**10.** Verfahren nach Anspruch 9, bei welcher die Leitungsführung (21) einen Randabschnitt (21.1) aufweist, der für eine kantennahe Platzierung der Leitungsführung (21) über eine Sollbruchstelle (55) abtrennbar ist.

**11.** Verfahren nach einem der vorstehenden Ansprüche, bei welchem der Befestigungsaufsatz (15) an der ersten Seitenfläche des Wand- oder Bodenelements (4) indirekt anliegt, nämlich der Befestigungsaufsatz (15) ein auf der Leitung (2) angeordnetes Gelenkteil (17) in der zweiten Leitungsrichtung (16.2) zu der ersten Seitenfläche (11) andrückt.

**12.** Verfahren nach Anspruch 11, bei welchem zwischen der ersten Seitenfläche (11) und dem Gelenkteil (17) ein Flanschelement (18) angeordnet ist, an welchem das Gelenkteil (17) verkippbar gelagert ist.

**13.** Leitungsanordnung (1) mit einer Leitung (2) in einer Öffnung (3) in einem Wand- oder Bodenelement (4), wobei die Leitung (2) in einem Verfahren nach einem der vorstehenden Ansprüche in der Öffnung (3) befestigt wurde.

**14.** Verwendung eines Befestigungsaufsatzes (15) mit einer Scheide (15.1) und/oder einer Leitung (2) für eine Leitungsanordnung nach Anspruch 14.
